Europäisches Patentamt

European Patent Office

Office européen des brevets

(11) Veröffentlichungsnummer: **0 241 736 B1**

(12) **EUROPÄISCHE PATENTSCHRIFT**

(45) Veröffentlichungstag der Patentschrift: **12.06.91**

(21) Anmeldenummer: **87103874.1**

(22) Anmeldetag: **17.03.87**

(51) Int. Cl.⁵: **H02M 1/088**, H02J 3/18, H03K 17/725

(54) Zündverfahren für einen Thyristorschalter.

(30) Priorität: **14.04.86 CH 1479/86**

(43) Veröffentlichungstag der Anmeldung:
**21.10.87 Patentblatt 87/43**

(45) Bekanntmachung des Hinweises auf die
Patenterteilung:
**12.06.91 Patentblatt 91/24**

(84) Benannte Vertragsstaaten:
**CH DE FR LI SE**

(56) Entgegenhaltungen:
**EP-A- 0 066 802**
**DE-A- 3 035 716**
**GB-A- 1 549 405**

**PATENT ABSTRACTS OF JAPAN, Band 8, Nr.
245 (P-312)[1682], 10. November 1984; & JP-
A-59 119 423 (FUJI DENKI SEIZO K.K.)
10-07-1984**

**K Engberg et al Thyristor switched capacities,TSC,in Theory and Practice IEE + Sympo Sept.85,London S.183-188**
</div>

(73) Patentinhaber: **BBC Brown Boveri AG**
**Haselstrasse**
**CH-5401 Baden(CH)**

(72) Erfinder: **Tschudi, Christoph**
**Höhenweg 25d**
**CH-5417 Untersiggenthal(CH)**
Erfinder: **Wittwer, Fritz**
**Schöneggstrasse 8c**
**CH-5300 Turgi(CH)**

## Beschreibung

Bei der Erfindung wird ausgegangen von einem Zündverfahren für einen Thyristorschalter nach dem Oberbegriff des Patentanspruchs 1.

Mit dem Oberbegriff nimmt die Erfindung auf einen Stand der Technik von Zündverfahren für einen Thyristorschalter Bezug, wie er durch K.Engberg, H.Frank und B.Klerfors, "Thyristor switched capazitors, TSC, in theory and practise", IEE-Symposium, Sept. 1985, London, S. 183-188, bekannt ist. Dort ist ein Wechselstromschalter mit antiparallelen Thyristoren beschrieben, der zum Anschluss eines Blindstromkompensationskondensators in Reihe mit einer Schutzdrossel an Wechselstromleitungen verwendet wird. Das Einschalten des Thyristors soll zweckmässigerweise dann erfolgen, wenn die Ventilspannung durch Null geht, oder, falls die Ventilspannung keinen Nulldurchgang aufweist, bei minimaler Ventilspannung. Im praktischen Betrieb kann die Ventilspannung infolge von Störungen, wie z.B. durch Stromoberschwingungen, mehrere Nulldurchgänge während der einen Halbperiode des Wechselstromes aufweisen. Um auch in solchen Fällen zu gewährleisten, dass der Wechselstromschalter nach einem Einschaltbefehl eingeschaltet bleibt, müssen die Thyristoren durch wiederholte Kurzzeitzündimpulse oder durch einen Langzeit-Zündimpuls ausreichender Energie gezündet werden. Bei Blindleistungskompensation an Hochspannungsleitungen werden mehrere Thyristoren in Reihe geschaltet, wobei die Information zur Erzeugung der Zündimpulse von Erdpotential ggf. über Glasfasern auf das Hochspannungspotential der Thyristoren übertragen wird. Die Thyristoren können dann elektrisch oder direkt optisch gezündet werden. Eine Zündung mit wiederholten Kurzzeit-Zündimpulsen erfolgt erst dann, wenn die Anoden-Kathodenspannung des Thyristors einen gewissen positiven Wert erreicht hat. Diese Mindest-Anoden-Kathodenspannung kann bei in Reihe geschalteten Thyristoren zu unterschiedlichen Zeiten erreicht werden, so dass der Beginn der Zündimpulse für die einzelnen Thyristoren entsprechend streuen kann. Diese Streuung ist durch die unterschiedliche Kapazität der einzelnen Thyristoren (Streubereich etwa ± 5 %) bedingt.

Die Erfindung, wie sie im Patentanspruch 1 definiert ist, löst die Aufgabe, ein Zündverfahren für einen Thyristorschalter anzugeben, das eine verbesserte Zündung der in Reihe geschalteten, zu zündenden Thyristoren des Thyristorschalters gewährleistet.

Ein Vorteil der Erfindung liegt darin, dass eine grössere Sicherheit beim Einschalten des Thyristorschalters erreicht wird, ohne dass die Dauer der Zündimpulse erhöht werden müsste. Ueber eine Rückmeldung wird der Zündbereitschaftszustand aller zu zündender Thyristoren ausgewertet und eine Zünderlaubnis erst dann gegeben, wenn eine vorgebbare Anzahl von Thyristoren zündbereit sind.

Dadurch wird ein fast gleichzeitiges Zünden aller in Reihe geschalteter, zu zündender Thyristoren erreicht. Gleichzeitig wird die Gefährdung der Thyristoren durch ein unerwünschtes Ausschalten bei Mehrfach-Stromnulldurchgängen infolge von Oberschwingungen eliminiert.

Gemäss einer vorteilhaften Ausgestaltung der Erfindung wird dieser Zündzeitpunkt so gewählt, dass nach einem Zünden der zu zündenden Thyristoren die Anoden-Kathodenspannung an den restlichen Thyristoren sehr schnell ansteigt, so dass auch bei diesen kurzfristig Zündbereitschaft eintritt und ein sicheres Einschalten des Thyristorschalters gewährleistet ist.

Zum einschlägigen Stand der Technik wird zusätzlich auf die EP-A2-0 066 802 verwiesen, aus der es bekannt ist, die Zündenergie für einen Thyristor aus dessen Hauptstrompfad zu gewinnen.

Die Erfindung wird nachstehend anhand von Ausführungsbeispielen erläutert. Es zeigen:

Fig. 1     ein Prinzipschaltbild einer Saugkreisschaltung bzw. eines statischen Blindleistungskompensators an einem Drehstromnetz mit Thyristorschaltern, bei denen das erfindungsgemässe Zündverfahren angewendet wird,

Fig. 2     eine erste Ansteuerschaltung für einen Thyristorschalter gemäss Fig. 1 mit zwei Logikschaltungen, zwei Impulsgeneratoren und je einem Zündsignalerzeuger für jeden Thyristor des Thyristorschalters,

Fig. 3     ein Prinzipschaltbild eines Zündsignalerzeugers gemäss Fig. 2 mit einem Impulswandler,

Fig. 4     ein Prinzipschaltbild eines Impulswandlers gemäss Fig. 3,

Fig. 5     ein Prinzipschaltbild eines Impulsgenerators gemäss Fig. 2,

Fig. 6     eine zweite Ansteuerschaltung für einen Thyristorschalter gemäss Fig. 1,

Fig. 7     ein Signaldiagramm zum Ausschaltverhalten eines Thyristorschalters unter Verwendung der ersten Ansteuerschaltung gemäss Fig. 2,

Fig. 8     ein Signaldiagramm zum Ausschaltverhalten eines Thyristorschalters unter Verwendung der zweiten Ansteuerschaltung gemäss Fig. 6,

Fig. 9     ein Signaldiagramm zum Ausschaltverhalten eines Thyristorschalters unter Verwendung der Ansteuerschaltungen gemäss den Fig. 2 und 6, wenn der Ausschaltbefehl im Bereich des Stromnulldurchganges erfolgt,

Fig. 10 ein Signaldiagramm zum Einschaltverhalten eines Thyristorschalters unter Verwendung der Ansteuerschaltungen gemäss den Fig. 2 und 6,

Fig. 11 ein Signaldiagramm zum Einschaltvorgang bei ungeladenem Kondensator und

Fig. 12 ein Signaldiagramm zum Einschaltvorgang bei geladenem Kondensator.

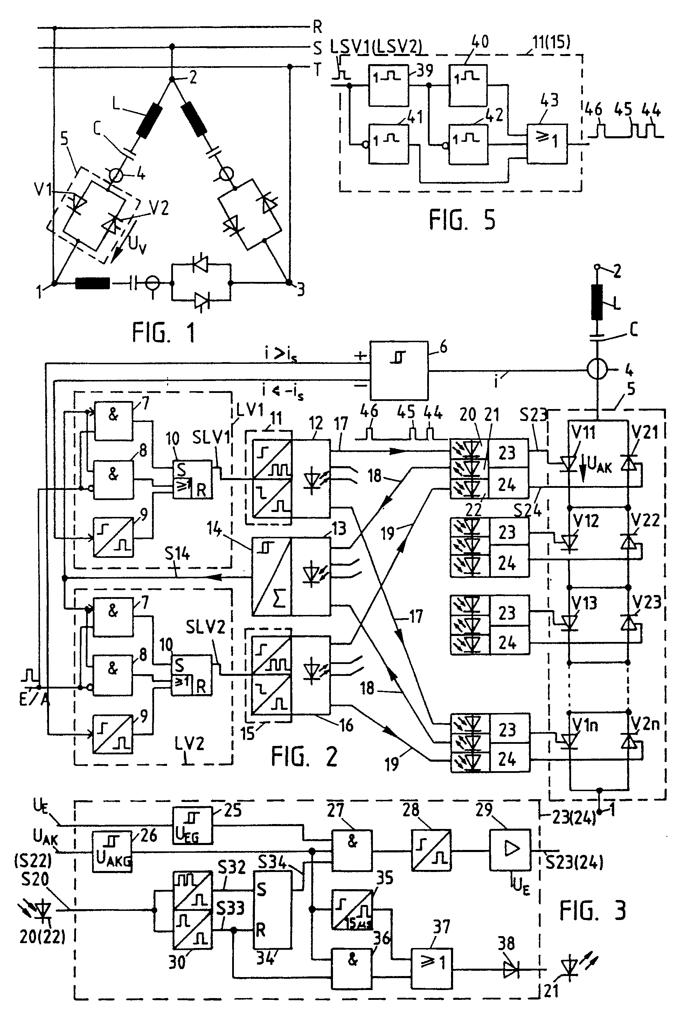

Gemäss Fig. 1 sind zwischen Phasenleitern R, S, T eines Drehstromnetzes mit 16 kV Spannung drei im Aufbau gleiche Saugkreise aus je einer Reihenschaltung einer Drossel L, eines Kondensators C, eines Stromwandlers 4 und eines Thyristorschalters bzw. Thyristorstellers 5 über Saugkreisanschlusspunkte 1, 2 und 3 in Dreieck geschaltet. Die Saugkreise sind auf die 5. Oberschwingung des Drehstromes abgestimmt und dämpfen die 5. Oberschwingung. Im Aufbau gleiche Dreieckschaltungen sind für die 7. und höhere Oberschwingungen vorgesehen (nicht dargestellt).

Die gleiche Schaltung kann zur Blindleistungskompensation in einem Drehstromnetz verwendet werden, wobei C einen Blindstromkompensationskondensator oder eine Kondensatorbank und L eine Schutzdrossel zur Begrenzung des Stromanstiegs beim Einschalten bedeuten.

Der für 2,5 kA Nennstrom ausgelegte Thyristorschalter 5 weist antiparallele Thyristoren V1 und V2 auf, an denen im ausgeschalteten Zustand eine Ventilspannung $U_V$ auftritt. Jeder dieser Thyristoren V1 bzw. V2 steht stellvertretend für eine Reihenschaltung aus n = 34 Thyristoren V11, V12, V13 ... V1n bzw. V21, V22, V23 ... V2n, vgl. Fig. 2, wobei zu jedem Thyristor ein anderer Thyristor antiparallel geschaltet ist. Grundsätzlich ist n beliebig ganzzahlig $\geq$ 2.

Eine 1. Ansteuerschaltung zur Durchführung eines 1. Zündverfahrens bzw. Zündsystems A ist in Fig. 2 dargestellt. Dabei haben in allen Figuren gleiche Bezugzeichen gleiche Bedeutung.

Jeder Thyristor V11 - V1n erhält an seiner Steuerelektrode einen Zündimpuls S23 von einem individuellen Zündimpulserzeuger 23 und jeder dazu antiparallele Thyristor V21 - V2n einen Zündimpuls S24 von einem individuellen Zündimpulserzeuger 24. Die zwischen Anode und Kathode eines jeden Thyristors abfallende Spannung ist mit $U_{AK}$ bezeichnet.

Jeder der näher in Fig. 3 dargestellten Zündimpulserzeuger 23 wird von einem individuellen Lichtsignalempfänger 20 angesteuert und jeder Zündimpulserzeuger 24 von einem individuellen Lichtsignalempfänger 22.

Je zwei zusammengehörige Zündimpulserzeuger 23 und 24 zeigen das Vorhandensein einer für eine Zündung ausreichenden Anoden-Kathodenspannung $U_{AK}$ mittels eines gemeinsamen Lichtsignalsenders 21 an. Die Signalausgänge der Lichtsignalsender 21 aller Zündimpulserzeuger 23, 24 sind über Lichtleiter 18 mit Signaleingängen eines Lichtsignalempfängers 13 verbunden, der ausgangsseitig mit einem Summen-Schwellwertglied 14 in Verbindung steht. Wenn mindestens 30 %, vorzugsweise 80 % der zu zündenden Thyristoren eine Anoden-Kathodenspannung $U_{AK}$ aufweisen, die grösser als ein vorgebbarer Einschaltspannungsgrenzwert $U_{AKG}$ von $\geq$ 30 V, insbesondere im Bereich von 40 V -60 V, vorzugsweise von 50 V ist, so hat ein Ausgangssignal S14 des Summen-Schwellwertgliedes 14 den Wert logisch "1", andernfalls logisch "0". Dieses Ausgangssignal S14 ist eingangsseitig UND-Gliedern 7 und 8 einer 1. Logikschaltung LV1 für die Zündimpulserzeugung der Thyristoren V11 ... V1n mit einer 1. Stromleitrichtung und gleichzeitig UND-Gliedern 7 und 8 einer 2. Logikschaltung LV2 für die Zündimpulserzeugung der Thyristoren V21 ... V2n mit einer zur 1. Stromleitrichtung entgegengesetzten 2. Stromleitrichtung zugeführt. Die Logikschaltungen LV1 und LV2 sind gleich aufgebaut.

Zweiten Eingängen der beiden UND-Glieder 7 sowie invertierten Eingängen der beiden UND-Glieder 8 ist ferner ein beliebig vorgebbares Ein-Aussignal E/A zugeführt. E/A = "1" entspricht einem Einschaltbefehl für den Thyristorschalter 5 und E/A = "0" einem Ausschaltbefehl. Das Ein-Aussignal E/A kann z.B. in Abhängigkeit vom Blindleistungsbedarf des Drehstromnetzes R, S, T gesteuert sein. Der Ausgang des UND-Gliedes 7 jeder Logikschaltung LV1, LV2 ist dem Setzeingang S eines RS-Flipflops 10 zugeführt. Der Ausgang des UND-Gliedes 8 jeder Logikschaltung LV1, LV2 ist dem Rücksetzeingang R des RS-Flipflops 10 zugeführt, welcher Rücksetzeingang über ein ODER-Gatter ansteuerbar ist. Der Rücksetzeingang R des RS-Flipflops 10 der Logikschaltung LV1 ist ferner über ein monostabiles Kippglied 9, das während des Impulsausganges nachtriggerbar ist, mit einem "-"-Ausgang eines Strom-Schwellwertdetektors 6 verbunden, welcher eingangsseitig an den Stromwandler 4 angeschlossen ist. Das Ausgangssignal dieses "-"-Ausgangs nimmt den Wert logisch "1" an für i < - $i_s$, andernfalls den Wert logisch "0". Dabei bedeutet i den mittels des Stromwandlers 4 detektierten Ventilstrom bzw. ein Iststromsignal und $i_s$ einen vorgebbaren Stromschwellwert, entsprechend 5 % - 30 % des Nennstromes, vorzugsweise entsprechend 10 % des Nennstromes.

Ein " + "-Ausgang des Strom-Schwellwertdetektors 6 ist über ein monostabiles Kippglied 9, das während des Impulsausganges nachtriggerbar ist, und über ein ODER-Gatter des Rücksetzeinganges R des RS-Kippgliedes 10 der Logikschaltung LV2 verbunden. Das Ausgangssignal dieses " + "-Ausganges nimmt den Wert logisch "1" an für $i > i_s$, andernfalls den Wert logisch "0".

Damit wird ein Zündfenstersignal SLV1 am Ausgang von LV1 bzw. am Ausgang von 10 von LV1 auf "1" gesetzt, wenn gleichzeitig E/A = "1" und S14 = "1" ist. SLV1 wird auf "0" gesetzt, wenn entweder gleichzeitig S14 = "1" und E/A = "0" sind oder wenn $i < - i_s$ ist. Am Ausgang der Logikschaltung LV2 bzw. am Ausgang von 10 von LV2 wird ein Zündfenstersignal SLV2 auf "1" gesetzt, wenn gleichzeitig E/A = "1" und S14 = "1" ist. SLV2 wird auf "0" gesetzt, wenn entweder gleichzeitig S14 = "1" und E/A = "0" sind oder wenn $i > i_s$ ist.

Der Ausgang von LV1 ist über einen näher in Fig. 5 dargestellten Impulsgenerator 11 mit einem Lichtsignalsender 12 verbunden. Der Impulsgenerator 11 erzeugt in Abhängigkeit von einem "0"-zu-"1"-Uebergang des Zündfenstersignals SLV1 einen Doppelimpuls 44, 45 und in Abhängigkeit von einem "1"-zu-"0"-Uebergang von SLV1 einen Einzelimpuls 46. Diese so erzeugten elektrischen Impulse werden im Lichtsignalsender 12 mittels einer Infrarot-Lumineszenzdiode in optische Signale umgewandelt und über Lichtleiter 17 zu den n Lichtsignalempfängern 20 übertragen, wo sie mittels Photodioden in elektrische Signale umgewandelt und jeweils einem zugehörigen Zündimpulserzeuger 23 zugeführt werden. In gleicher Weise werden die Zündfenstersignale SLV2 über einen Lichtimpulsgenerator 15, einen Lichtsignalsender 16 und Lichtleiter 19 zu n Lichtsignalempfängern 24 übertragen, wo sie jeweils einem zugehörigen Zündsignalerzeuger 24 zugeführt werden. Der Impulsgenerator 15 ist gleich aufgebaut wie der Impulsgenerator 11, der Lichtsignalsender 16 gleich wie der Lichtsignalsender 12 und der Lichtsignalempfänger 22 gleich wie der Lichtsignalempfänger 20.

In Fig. 3 ist eine Schaltung für die gleich aufgebauten Zündimpulserzeuger 23 und 24 angegeben. Die nachfolgenden Erläuterungen beziehen sich auf den Zündimpulserzeuger 23. Dieser erhält eingangsseitig von dem Lichtsignalempfänger 20 ein dem Zündfenstersignal SLV1 zugeordnetes elektrisches Signal S20, das einem Impulswandler 30 zugeführt ist. Der Impulswandler 30 wandelt den im Impulsgenerator 11 erzeugten und optisch übertragenen Doppelimpuls 44, 45 in einen Setzimpuls S32 um, der ausgangsseitig dem Setzeingang S eines RS-Flipflops 34 zugeführt ist. Der Impulswandler 30 erzeugt ferner in Abhängigkeit von dem im Impulsgenerator 11 dort in Abhängigkeit von der abfallenden Flanke des Zündfenstersignals SLV1 erzeugten Einzelimpulses 46 einen Rücksetzimpuls S33, der an den Rücksetzeingang R des RS-Flipflops 34 und an einen 1. Eingang eines UND-Gliedes 36 weitergeleitet wird. Das UND-Glied 36 ist ausgangsseitig über ein ODER-Glied 37 mit einer Diode 38 verbunden, welche kathodenseitig ein elektrisches Signal an den Lichtsignalsender 21 (Infrarot-Lumineszenzdiode) abgibt.

Am Ausgang des RS-Flipflops 34 liegt ein Zündbereitschaftssignal S34 = "1" an, nachdem SLV1 von "0" auf "1" wechselt und auf "1" bleibt; andernfalls hat das Zündbereitschaftssignal S34 den logischen Wert "0". Das Zündbereitschaftssignal S34 ist einem 1. Eingang eines UND-Gliedes 27 zugeführt, dessen Ausgang über ein monostabiles Kippglied 28, das während des Impulsausganges nachtriggerbar ist, mit einem, von einer nicht dargestellten Hilfsenergiequelle mit einer Spannung $U_E$ gespeisten, Verstärker 29 verbunden, an dessen Ausgang das Zündsignal S23 abgreifbar ist. Ein 2. Eingang des UND-Gliedes 27 ist mit dem Ausgang eines Schwellwertdetektors 26 verbunden, an dessen Eingang die Anoden-Kathodenspannung $U_{AK}$ des zu zündenden Thyristors, z.B. V11, anliegt. Ueberschreitet die Anoden-Kathodenspannung $U_{AK}$ den vorgebbaren Einschaltspannungsgrenzwert $U_{AKG}$ von vorzugsweise 50 V, so ist das Ausgangssignal von 26 = "1", andernfalls = "0". Ein 3. Eingang des UND-Gliedes 27 ist mit dem Ausgang eines Schwellwertdetektors 25 verbunden, an dessen Eingang die Spannung $U_E$ der Hilfsenergiequelle anliegt. Ist $U_E$ grösser als ein vorgebbarer Grenzwert $U_{EG}$ von vorzugsweise 25 V, bei der die Hilfsenergie ausreicht, um einen genügend starken Zündimpuls S23 zu erzeugen, so ist das Ausgangssignal von 25 = "1", andernfalls = "0".

Der 2. Eingang des UND-Gliedes 27 ist ferner mit dem Eingang eines monostabilen Kippgliedes 35, das während des Impulsausganges nachtriggerbar ist und einen Ausgangsimpuls von einstellbarer Dauer von vorzugsweise 15 $\mu s$ liefert, und mit einem 2. Eingang des UND-Gliedes 36 verbunden.

Damit wird am Ausgang des Verstärkers 29 nur dann ein Zündimpuls S23 an die Steuerelektrode des zugehörigen Thyristors, z.B. V11, abgegeben, wenn gleichzeitig $U_E > U_{EG}$, $U_{AK} > U_{AKG}$ und S34 = "1" ist. Wenn $U_{AK} > U_{AKG}$ wird wird über den Schwellwertdetektor 26, das Kippglied 35, das ODER-Glied 37, die Diode 38, den Lichtsignalsender 21, den Lichtleiter 18 und den Lichtsignalempfänger 13 ein Impuls an das Summen-Schwellwertglied 14 geliefert und dort analog summiert.

Der näher in Fig. 4 dargestellte Impulswandler 30 weist eingangsseitig ein monostabiles Kippglied 31 mit einem Inverseingang auf, das während des Impulsausganges nicht nachtriggerbar ist. Der Ausgangsimpuls dieses Kippgliedes 31 dauert geringfügig länger als der obengenannte Doppelimpuls 44, 45. Das dem Impulswandler 30 zugeführte Signal S20 ist gleichzeitig 1. Eingängen eines UND-Gliedes 32 und eines UND-Gliedes 33 zugeführt.

Der Ausgang des Kippgliedes 31 ist mit einem 2. Eingang des UND-Gliedes 32 und mit einem Inverseingang des UND-Gliedes 33 verbunden. Am Ausgang des UND-Gliedes 32 ist das Signal S32 abgreifbar und am Ausgang des UND-Gliedes 33 das Signal S33. Der 2. Impuls 45 des Doppelimpulses 44, 45 erzeugt einen Setzimpuls S32 = "1" für das RS-Flipflop 34. Der 1. Impuls 44 des Doppelimpulses 44, 45 und der dem Doppelimpuls nachfolgende Einzelimpuls 46 erzeugen einen Rücksetzimpuls S33 = "1" für das RS-Flipflop 34.

In Fig. 5 ist ein Prinzipschaltbild für die gleich aufgebauten Impulsgeneratoren 11 und 15 angegeben. Die nachfolgenden Erläuterungen beziehen sich auf den Impulsgenerator 11. Eingangsseitig ist das Zündfenstersignal SLV1 einem monostabilen Kippglied 39 und dem Inverseingang eines monostabilen Kippgliedes 41 zugeführt. Der Ausgang des Kippgliedes 39 ist einerseits über ein weiteres monostabiles Kippglied 40 und andererseits über den Inverseingang eines monostabilen Kippgliedes 42 1. und 2. Eingängen eines ODER-Gliedes 43 zugeführt. Ein 3. Eingang des ODER-Gliedes 43 ist mit dem Ausgang des Kippgliedes 41 verbunden. Das Ausgangssignal des ODER-Gliedes 43 wird dem Lichtsignalsender mit Infrarot-Lumineszenzdiode 12 zugeführt. Dieses Ausgangssignal weist in Abhängigkeit von der Anstiegsflanke des Zündfenstersignals SLV1 einen Doppelimpuls 44, 45 und in Abhängigkeit von der Abstiegsflanke von SLV1 einen Einzelimpuls 46 auf. Die Kippglieder 39 - 42 sind während des Impulsausganges nicht nachtrigerbar.

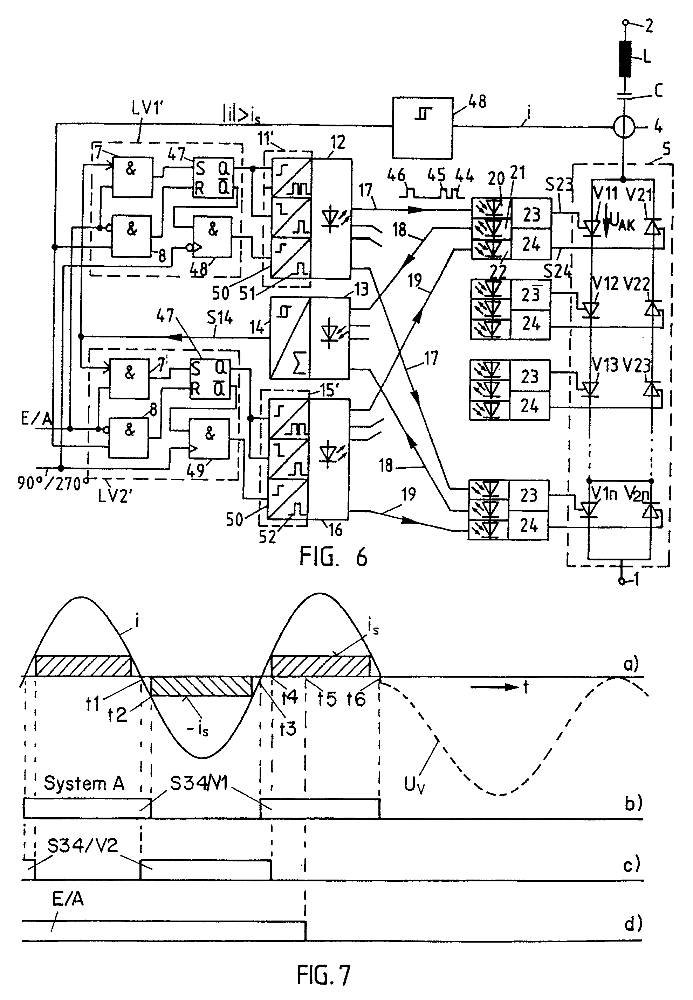

Eine 2. Ansteuerschaltung zur Durchführung eines 2. Zündverfahrens bzw. Zündsystems B ist in Fig. 6 dargestellt, die bis auf andere Logikschaltungen LV1' und LV2' sowie andere Impulsgeneratoren 11' und 15' mit der 1. Ansteuerschaltung übereinstimmt. Die Logikschaltungen LV1' und LV2' sind einander ähnlich aufgebaut. Im Unterschied zu den Logikschaltungen LV1 und LV2 entfällt hier das monostabile Kippglied 9. Ein RS-Flipflop 47 benötigt im Unterschied zum RS-Flipflop 10 kein ODER-Gatter im Rücksetzeingang R. Der S-Eingang des RS-Flipflops 47 ist an den Ausgang des UND-Gliedes 7 angeschlossen und der Rücksetzeingang an den Ausgang des UND-Gliedes 8. Der 1. Eingang des UND-Gliedes 7 von LV1' und LV2' ist wieder mit dem Ausgang des Summen-Schwellwertgliedes 14 verbunden. 2. Eingängen der beiden UND-Glieder 7 sowie invertierten 1. Eingängen der beiden UND-Glieder 8 ist wieder das Ein-Aussignal E/A zugeführt. 2. Eingänge der UND-Glieder 8 sind mit dem Ausgang eines Strom-Schwellwertdetektors 48 verbunden, dessen Ausgangssignal den logischen Wert "1" annimmt für |i|> is und ansonsten den Wert "0".

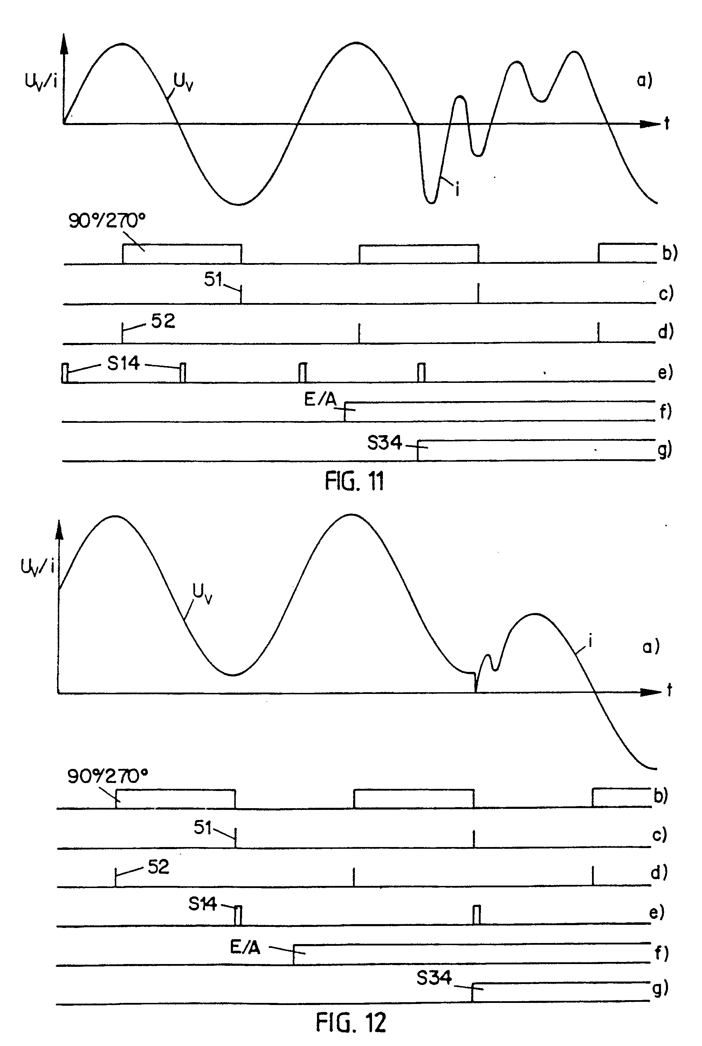

Der Q̄-Ausgang der beiden RS-Flipflops 47 ist mit einem 1. Eingang eines UND-Gliedes 48 in LV1' bzw. 49 in LV2' verbunden. Das UND-Glied 48 weist einen 2. invertierten, dynamischen Eingang auf, an den ein netzsynchrones 90°/270°-Rechtecksignal angelegt ist, das von einer nicht dargestellten Regeleinrichtung geliefert wird. Die positive Flanke des 90°/270°-Rechtecksignals wird bei 90° Ventilspannung $U_V$ und die negative Flanke bei 270° erzeugt, vgl. Fig. 11a) und 11b) sowie 12a) und 12b).

Das UND-Glied 49 weist als 2. Eingang einen nicht invertierten, dynamischen Eingang auf, an den dieses 90°/270°-Rechtecksignal angelegt ist. Die Ausgänge der UND-Glieder 48 und 49 sind jeweils mit dem Eingang eines Einzelimpulsgenerators 50 verbunden, der Bestandteil eines Impulsgenerators 11' bzw. 15' ist. Die Generatoren 11' und 15' unterscheiden sich dadurch von den Impulsgeneratoren 11 und 15, dass sie zusätzlich diesen Einzelimpulsgenerator 50 aufweisen, welcher in Abhängigkeit von einem eingangsseitigen Signalübergang vom "0"- zum "1"-Pegel einen Einzelimpuls 51 (in 11') bzw. 52 (in 15') erzeugt, vgl. Fig. 11c) und 11d) sowie Fig. 12c) und 12d).

In Abhängigkeit von diesen Einzelimpulsen 51 bzw. 52 wird in den Lichtsignalsendern 12 bzw. 16 ein Lichtsignal erzeugt, über die Lichtleiter 17 bzw. 19 auf die Lichtsignalempfänger 20 bzw. 22 übertragen und dort empfangen. Für $U_{AK} > U_{AKG}$ wird über den Impulswandler 30, vgl. Fig. 3, über das UND-Glied 36, das ODER-Glied 37, die Diode 38 und den Lichtsignalsender 21 ein Lichtsignal erzeugt und über den Lichtleiter 18 auf den Lichtsignalempfänger 13 übertragen und dort in elektrische Signale umgewandelt. Diese werden in dem Summen-Schwellwertglied 14 addiert. Die Summe wird mit einem vorgebbaren Grenzwert verglichen. Bei einer Grenzwertüberschreitung wird das Ausgangssignal S14 erzeugt, vgl. Fig. 11e) und 12e).

Bei ungeladener Kondensatorbank C wird nach jedem Nulldurchgang von $U_V$ ein Ausgangssignal S14 = "1" erzeugt, vgl. Fig. 11e). Bei geladener Kondensatorbank C mit andauernd positiver Ventilspannung $U_V$ wird nur nach einem Spannungsminimum bei 270° das Ausgangssignal S14 = "1" erzeugt, da hier für die Ventile V1 $U_{AK} > U_{AKG}$ ist. Bei 90° ist für die Ventile V2 deren Anoden-Kathodenspannung negativ, so dass S14 = "0" bleibt.

Steht gleichzeitig mit dem Ausgangssignal S14 = "1" ein Einschaltbefehl E/A = "1" an, so werden die Thyristorventile gezündet, vgl. Fig. 11f) und 11g) sowie Fig. 12f) und 12g). Durch dieses Verfahren wird erreicht, dass die Thyristorventile immer bei minimaler positiver Spannung gezündet werden.

Das erfindungsgemässe Zündverfahren wird nachstehend für die Systeme A und B anhand der Figuren 7 - 10 erläutert, in denen unterschiedliche Signaldiagramme in Abhängigkeit von der Zeit t dargestellt sind.

Fig. 7a zeigt für das System A (Ansteuerschaltung Fig. 2) den zeitlichen Verlauf des Ventilstromes i, der zu den Zeitpunkten t1, t3 und t6 Nulldurchgänge aufweist und im Zeitpunkt t6 durch den Thyristorschalter 5 abgeschaltet wird. Schraffiert sind die Stromschwellwerte $i_s$ und $-i_s$ eingetragen. Das Ein-Aussignal E/A, vgl. Fig. 7d), hat bis zum Zeitpunkt t5 den logischen Wert "1". Beim Stromnulldurchgang im Zeitpunkt t1 schalten die bis dahin leitenden Thyristoren V1 ab, und die Anoden-Kathodenspannungen $U_{AK}$ von 80 % der gesperrten Thyristoren V2 überschreiten innerhalb von 50 $\mu s$ den Einschaltspannungsgrenzwert $U_{AKG}$ von 50 V. Dadurch wird das Zündbereitschaftssignal S34 für die Thyristoren V2, kurz als S34/V2 bezeichnet, auf "1" gesetzt, vgl. Fig. 7c), und jeder der Thyristoren V2 erhält einen Zündimpuls S24, sofern seine individuelle Anoden-Kathodenspannung $U_{AK} > U_{AKG}$ ist. Dadurch, dass 80 % der Thyristoren praktisch im gleichen Zeitpunkt einschalten, bricht an ihnen die Anoden-Kathodenspannung $U_{AK}$ zusammen und die Anoden-Kathodenspannung an den restlichen 20 % der Thyristoren steigt sehr rasch an, so dass auch diese sicher zünden und damit eingeschaltet werden.

Sobald der Ventilstrom i durch die Thyristoren V2 den Wert $i_s$ überschreitet ($i = -i_s$ im Zeitpunkt t2) verschwindet der Zündbereitschaftsimpuls S34 für die Thyristoren V1, kurz als S34/V1 bezeichnet, vgl. Fig. 7b). Innerhalb von 50 $\mu s$ nach dem Stromnulldurchgang von i im Zeitpunkt t3 überschreitet die Anoden-Kathodenspannung $U_{AK}$ von 80 % der gesperrten Thyristoren V1 den Einschaltspannungsgrenzwert $U_{AKG}$ und das Zündbereitschaftssignal S34/V1 wird auf "1" gesetzt, vgl. Fig. 7b). Im Zeitpunkt t4 ist $i > i_s$, so dass S34/V2 = "0" wird und nach dem Zeitpunkt t5 wegen E/A = "0" nicht mehr auf "1" gesetzt werden kann.

Im Zeitpunkt t6 tritt durch die Induktivität der Schutzdrossel L ein Spannungssprung bei der gestrichelt dargestellten Ventilspannung $U_V$ auf, so dass bei E/A = "0" S14 = "1" ist und somit das Ausgangssignal des UND-Gliedes 8 von LV1 den logischen Wert "1" annimmt. Dadurch wird das RS-Flipflop 10 zurückgesetzt, SLV1 = "0" und S34/V1 = "0".

Bei dem System A werden die Zündbereitschaftssignale S34/V1 und S34/V2 jeweils nach Erreichen einer bestimmten Anzahl von positiven Spannungsrückmeldungen erzeugt bzw. auf "1" gesetzt und nach Erreichen der Stromschwelle des antiparallelen Ventils gelöscht bzw. auf "0" gesetzt.

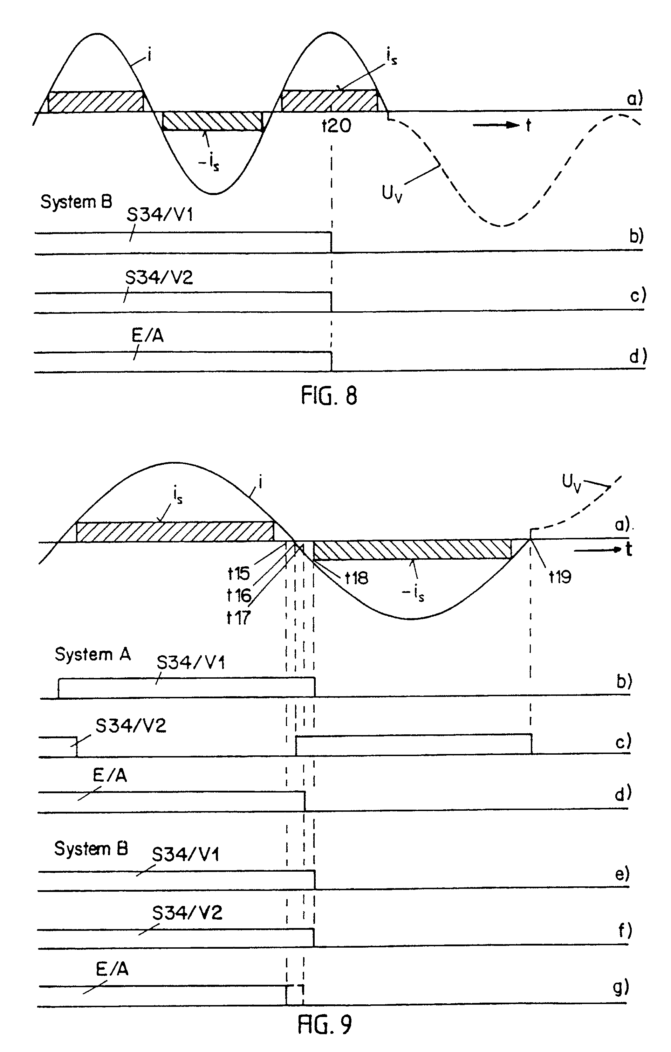

Fig. 8a zeigt für das System B (Ansteuerschaltung Fig. 6) den zeitlichen Verlauf des Ventilstromes i und gestrichelt den Verlauf der Ventilspannung $U_V$. Hier bleiben die Zündbereitschaftssignale S34/V1, vgl. Fig. 7b), und S34/V2, vgl. Fig. 7c) für den ganzen Zeitbereich des Einschaltzustandes (E/A = "1") des Ein-Aussignals E/A, d.h. bis zum Zeitpunkt t20 auf logisch "1", vgl. Fig. 8d). Mit E/A = "0" und $|i| > i_s$ wird das Ausgangssignal der beiden UND-Glieder 8 von Fig. 6 logisch "1", so dass beide RS-Flipflops 47 zurückgesetzt und S34/V1 = "0" sowie S34/V2 = "0" werden. Die Zündbereitschaftssignale S34/V1 und S34/V2 werden mit dem Ausschaltbefehl (E/A = "0") des Ein-Aussignals E/A auf "0" gesetzt, sofern einer der Thyristoren V1 oder V2 den Stromschwellwert $i_s$ überschritten hat.

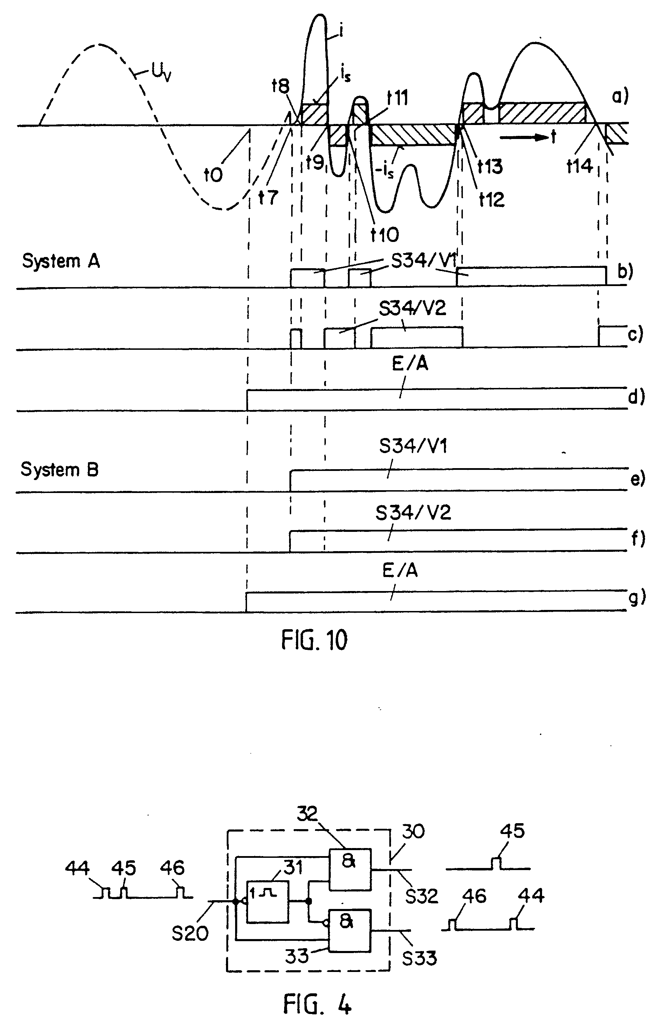

Fig. 9 zeigt das Ausschaltverhalten der Thyristoren V1 und V2 für die Systeme A und B im Bereich des Stromnulldurchganges. Dabei beziehen sich die Figuren 9b) - 9d) auf das System A (Ansteuerschaltung Fig. 2) und die Fig. 9e) - 9g) auf das System B (Ansteuerschaltung Fig. 6).

Der Ausschaltbefehl E/A = "0" kommt beim System A z.B. im Zeitpunkt t17 kurz nach dem Nulldurchgang des Ventilstromes i, vgl. Fig. 9d). Wie in Verbindung mit Fig. 7 beschrieben, wird etwa 50 $\mu s$ nach dem Zeitpunkt t16 des Stromnulldurchganges S34/V2 = "1" und im Zeitpunkt t18, wegen $|i| < i_s$, S34/V1 = "0". Im Zeitpunkt t19 des nachfolgenden Stromnulldurchganges wird auch S34/V2 = "0".

Beim System B kommt der Ausschaltbefehl E/A = "0" im Zeitpunkt t15 oder t17, vgl. Fig. 9g), kurz vor oder nach dem Stromnulldurchgang. Da die RS-Flipflops 37 dann zurückgesetzt werden, wenn gleichzeitig E/A = "0" und $|i| > i_s$ ist, verschwinden die Zündbereitschaftssignale S34/V1 und S34/V2 erst im Zeitpunkt t18.

Fig. 10 zeigt das Einschaltverhalten der Thyristoren V1 und V2 für die Systeme A und B. Dabei beziehen sich die Figuren 10b) - 10d) auf das System A und die Fig. 10e) - 10g) auf das System B. Der Einschaltbefehl E/A = = "1" kommt bei beiden Systemen im Zeitpunkt t0, vgl. Fig. 10d) und 10g).

Beim System A erhält das RS-Flipflop 10 von LV1 erst dann über das UND-Glied 7 einen Setzimpuls, wenn nach E/A = "1" auch S14 = "1" wird. Dies ist im Zeitpunkt t7 der Fall, wenn die Ventilspannung $U_V$ für 80 % der Thyristoren V1 grösser als $U_{AKG}$ ist, vgl. Fig. 10a) und 10b). In Abhängigkeit von diesem Setzimpuls wird SLV1 = "1" und S34/V1 = "1". Im Zeitpunkt t7 wird auch S34/V2 = "1" und behält so lange diesen Zustand, bis das RS-Flipflop 10 von LV2 bei Erreichen des Stromschwellwertes $i_s$ des antiparallelen Thyristors V1 zurückgesetzt wird. Das Zündbereitschaftssignal S34/V2 wird dann erst wieder nach einem Stromnulldurchgang im Zeitpunkt t9 auf "1" gesetzt.

Im Zeitpunkt t0 ist S14 = "0". Das Kippglied 35, vgl. Fig. 3, liefert in Abhängigkeit von einer Anstiegsflanke seines Eingangsimpulses nur einen Ausgangsimpuls von 15 $\mu$s Dauer, so dass das Summen-Schwellwertglied 14, vgl. Fig. 2, keine Schwellwertüberschreitung aufweisen kann.

Beim System B gilt für die RS-Flipflops 37 die gleiche Setzbedingung wie beim System A. Die Zündbereitschaftssignale S34/V1 und S34/V2 bleiben so lange auf "1", bis die in Verbindung mit den Fig. 8 und 9 dargelegte Ausschaltbedingung gegeben ist.

Durch eine nicht dargestellte Einschaltlogik kann erreicht werden, dass S34/V2 erst zum Zeitpunkt t9 auf "1" gesetzt wird, wie in Fig. 10f) gestrichelt angedeutet.

Anstatt einer Kodierung der Lichtimpulse mit Doppel-und Einfachimpulsen kann auch z.B. eine Kodierung mit Dreifach- und Doppelimpulsen vorgesehen werden. Dies ist insbesondere dann vorteilhaft, wenn zur Ueberwachung der Thyristoren ein separater Einfachimpuls benötigt wird, worauf hier nicht näher eingegangen ist. Die in Verbindung mit Fig. 6 erläuterte Spannungspolaritätsüberwachung durch das 90°/270°-Rechtecksignal kann vorteilhaft auch bei der Schaltung gemäss Fig. 2 eingesetzt werden.

## Ansprüche

1. Zündverfahren für einen Thyristorschalter (5)
   a) mit mindestens zwei in Reihe geschalteten Thyristoren (V11 - V1n; V21 - V2n),
   b) wobei zu jedem dieser Thyristoren (V1) ein Thyristor (V2) antiparallel geschaltet ist,
   c) wobei der Thyristorschalter in Abhängigkeit von einem vorgebbaren Ein-Aussignal (E/A) gezündet oder gesperrt wird und
   d) wobei ein mindestens einmaliges Zünden eines einzuschaltenden Thyristors frühestens dann erfolgt, wenn an ihm eine positive Anoden-Kathodenspannung ($U_{AK}$) anliegt, die einen vorgebbaren Einschaltspannungsgrenzwert ($U_{AKG}$) überschreitet,
   dadurch gekennzeichnet,
   e) dass ein mindestens einmaliges Zünden jedes einzuschaltenden Thyristors mittels eines Kurzzeit-Zündimpulses (S23, S24) nur während der Dauer des Einschaltzustandes des Ein-Aussignals (E/A) erfolgt,
   f) wenn gleichzeitig bei mindestens 30 % von in Reihe geschalteten, zu zündenden Thyristoren deren Anoden-Kathodenspannung ($U_{AK}$) grösser als der vorgebbare Einschaltspannungsgrenzwert $U_{AKG}$ ist und
   g) wenn der Ventilstrom (i) durch mindestens einen antiparallelen Thyristor (V1, V2; V11 - V1n, V21 - V2n) einen vorgebbaren

Stromschwellwert ($i_s$) nicht überschreitet.

2. Zündverfahren nach Anspruch 1, dadurch gekennzeichnet, dass der Kurzzeit-Zündimpuls (S23, S24) nur dann erzeugt wird, wenn bei mindestens 80 % der zu zündenden Thyristoren die Anoden-Kathodenspannung ($U_{AK}$) grösser als der vorgebbare Einschaltspannungsgrenzwert ($U_{AKG}$) ist.

3. Zündverfahren nach Anspruch 1 oder 2, dadurch gekennzeichnet, dass der Kurzzeit-Zündimpuls (S23, S24) frühestens dann erzeugt wird, wenn die Spannung ($U_E$) einer Zünd- bzw. Hilfsenergiequelle grösser als eine vorgebbare Grenzwertspannung ($U_{EG}$) ist.

4. Zündverfahren nach einem der Ansprüche 1 bis 3, dadurch gekennzeichnet, dass der Stromschwellwert für den Ventilstrom (i) > 5 % des Thyristornennstromes ist.

5. Zündverfahren nach einem der Ansprüche 1 bis 4, dadurch gekennzeichnet, dass der Kurzzeit-Zündimpuls (S23, S24) in Abhängigkeit von einem 90°-Signal und/oder von einem 270°-Signal (90°/270°) der Ventilspannung ($U_V$) erzeugt wird.

6. Zündverfahren nach Anspruch 5, dadurch gekennzeichnet, dass der Kurzzeit-Zündimpuls (S23, S24) bei minimaler positiver Spannung erzeugt wird.

## Claims

1. Triggering method for a thyristor switch (5)
   a) having at least two thyristors (V11 - V1n; V21 - V2n), wired in series,
   b) a thyristor (V2) being wired antiparallel to each of these thyristors (V1),
   c) the thyristor switch being triggered or cut off as a function of a presettable on-off signal (E/A) and
   d) at least a single triggering of a thyristor to be switched on taking place at the earliest if a positive anode-cathode voltage ($U_{AK}$) is applied to it which exceeds a presettable switch-on voltage limiting value ($U_{AKG}$),
   characterised in that
   e) at least a single triggering of each thyristor to be switched on taking place by means of a short-duration trigger pulse (S23, S24) only during the duration of the switch-on condition of the on-off signal E/A
   f) if, for at least 30% of the series-connected thyristors to be triggered, their anode-cathode voltage ($U_{AK}$) is simultaneously greater than the presettable switch-on voltage limiting value ($U_{AKG}$), and

g) if the valve current (i) through at least one antiparallel thyristor (V1, V2; V11 - V1n, V22 - V2n) does not exceed a presettable current threshold value.

2. Triggering method according to Claim 1, characterised in that the short-duration trigger pulse (S23, S24) is only generated if, for at least 80% of the thyristors to be triggered, the anode-cathode voltage ($U_{AK}$) is greater than the presettable switch-on voltage limiting value ($U_{AKG}$).

3. Triggering method according to Claims 1 or 2, characterised in that the short-duration trigger pulse (S23, S24) is generated no sooner than when the voltage ($U_E$) of a trigger or an auxiliary power source is greater than a presettable limiting value voltage ($U_{EG}$).

4. Triggering method according to one of Claims 1 to 3, characterised in that the current threshold value for the valve current (i) is > 5% of the thyristor rated current.

5. Triggering method according to one of Claims 1 to 4, characterised in that the short-duration trigger pulse (S23, S24) is generated as a function of a 90° signal and/or of a 270° signal (90°/270°) of the valve voltage ($U_V$).

6. Triggering method according to Claim 5, characterised in that the short-duration trigger pulse (S23, S24) is generated at minimum positive voltage.


**Revendications**

1. Procédé d'allumage pour un commutateur à thyristors (5)

a) comportant au moins deux thyristors connectés en série (V11-V1n; V21-V2n),

b) un thyristor (V2) étant couplé de manière antiparallèle à chacun de ces thyristors (V1),

c) le commutateur à thyristors étant allumé ou bloqué en fonction d'un signal de marche/arrêt prédéterminé, et

d) un allumage au moins unique d'un thyristor à enclencher se produisant au plus tôt lorsqu'il reçoit une tension anodique-cathodique positive ($U_{AK}$) qui excède une valeur limite de tension d'enclenchement prédéterminée ($U_{AKG}$),

caractérisé en ce que :

e) un allumage au moins unique de chaque thyristor à enclencher est effectué au moyen d'une impulsion d'allumage de courte durée (S23, S24) uniquement pendant la durée de l'état d'enclenchement du signal de marche/arrêt (E/A),

f) lorsque, simultanément, au moins 30% des thyristors connectés en série à allumer présentent une tension anodique-cathodique ($U_{AK}$) supérieure à la valeur limite de la tension d'enclenchement prédéterminée ($U_{AKG}$), et

g) lorsque le courant de valve (i) traversant au moins un thyristor antiparallèle (V1, V2; V11-V1n, V21-V2n) n'excède pas un seuil de courant prédéterminé ($i_S$).

2. Procédé d'allumage suivant la revendication 1, caractérisé en ce que l'impulsion d'allumage de courte durée (S23, S24) n'est produite que lorsque 80% des thyristors à allumer présentent une tension anodique-cathodique ($U_{AK}$) supérieure à la valeur limite de tension d'enclenchement prédéterminée ($U_{AKG}$).

3. Procédé d'allumage suivant la revendication 1 ou 2, caractérisé en ce que l'impulsion d'allumage de courte durée (S23, S24) est produite au plus tôt lorsque la tension ($U_E$) d'une source d'allumage ou d'énergie auxiliaire est supérieure à une tension limite prédéterminée ($U_{EG}$).

4. Procédé d'allumage suivant l'une quelconque des revendications 1 à 3, caractérisé en ce que le seuil de courant pour le courant de soupape (i) est supérieur à 5% du courant nominal des thyristors.

5. Procédé suivant l'une quelconque des revendications 1 à 4, caractérisé en ce que l'impulsion d'allumage de courte durée (S23, S24) est produite en fonction d'un signal à 90° et/ou d'un signal à 270° (90°/270°) de la tension de valve ($U_V$).

6. Procédé d'allumage suivant la revendication 5, caractérisé en ce que l'impulsion d'allumage de courte durée (S23, S24) est produite lors d'une tension positive minimale.

FIG. 1

FIG. 5

FIG. 2

FIG. 3

FIG. 6

FIG. 7

FIG. 8

FIG. 9

FIG. 10

FIG. 4

EP 0 241 736 B1

FIG. 11

FIG. 12